# EUROPEAN PATENT SPECIFICATION

(11) **EP 1 557 752 B1**
(45) Date of publication and mention of the grant of the patent: **01.08.2007**
(21) Application number: 04028052.1
(22) Date of filing: 25.11.2004
(51) Int. Cl.: G06F 9/00

(54) **Distributed semantic schema**
Verteiltes semantisches Schema
Schéma sémantique distribué

(30) Priority: 22.01.2004 US 538306 P; 18.05.2004 US 847828
(43) Date of publication of application: 27.07.2005
(73) Proprietor: MICROSOFT CORPORATION, Redmond, WA 98052 (US)
(72) Inventor: Hon, Hsiao-Wuen, Redmond Washington 98052 (US); Wang, Kuansan, Redmond Washington 98052 (US)
(74) Representative: Grünecker, Kinkeldey, Stockmair & Schwanhäusser Anwaltssozietät

(56) References cited:
- KUANSAN WANG: "Semantic modeling for dialog systems in a pattern recognition framework" AUTOMATIC SPEECH RECOGNITION AND UNDERSTANDING, 2001. ASRU '01. IEEE WORKSHOP ON 9-13 DEC. 2001, PISCATAWAY, NJ, USA,IEEE, 9 December 2001 (2001-12-09), pages 284-287, XP010603732 ISBN: 0-7803-7343-X
- DENG L ET AL: "A speech-centric perspective for human-computer interface" PROCEEDINGS OF THE 2003 IEEE RADAR CONFERENCE. HUNTSVILLE, AL, MAY 5 - 8, 2003, IEEE RADAR CONFERENCE, NEW YORK, NY : IEEE, US, 9 December 2002 (2002-12-09), pages 263-267, XP010642560 ISBN: 0-7803-7920-9

## Description

### BACKGROUND OF THE INVENTION

The present invention relates to methods and systems for defining and handling user/computer interactions. In particular, the present invention relates to systems that resolve user input into a command or entity.

In typical computer systems, user input has been limited to a rigid set of user responses having a fixed format. For example, with a command line interface, user input must be of a specific form which uniquely identifies a single command and selected arguments from a limited and specific domain of possible arguments. Similarly, with a graphical user interface, only a limited set of options are presented to the user and it is relatively straight forward for a developer to define a user input domain consisting of a limited set of commands or entities for each specific user input in the limited set of user inputs.

By limiting a user to a rigid set of allowed inputs or responses, computer systems have required a significant level of skill from the user or operator. It has traditionally been the responsibility of the user to mentally translate the desired task to be performed into the specific input recognized by the applications running on the computer system. In order to expand the usability of computer systems, there has been an ongoing effort to provide applications with a natural language (NL) interface. The natural language interface extends the functionality of applications beyond their limited input set and opens the computer system to inputs in a natural language format. The natural language interface is responsible for performing a translation from the relatively vague and highly context based realm of natural language into the precise and rigid set of inputs required by a computer application.

Natural language interfaces utilize semantic objects and various actions to translate natural language inputs into information used by an application. When authoring applications that interact with natural language interfaces, application developers can use procedural and declarative programming languages to implement the semantic objects and actions. Procedural programming languages such as C, C++, C# and Fortran can define various actions performed on data objects during operation of an application. Declarative programming languages such as XML, LISP and Prolog can define the semantic objects of an application.

However, integration between declarative language code and procedural language code has been difficult for authors to develop. In one approach, a semantic object is represented by a declarative language, but an author is required to duplicate the semantic object declaration for each action using the semantic object. In another approach, an obscured declaration of a semantic object is used in a procedural language, which requires the author to track and maintain relationships of semantic objects. As a result, an authoring tool to integrate procedural logic modules and declarative logic modules would be useful. Wang, K., "Semantic modeling for dialog systems in a pattern recognition framework", Automatic Speech Recognition and Understanding, 2001, ASRU '01, IEEE workshop on December 9 to 13, 2001, pages 284 to 287, XP010603732, relates to a multimodal dialog system describing how semantic lexicon and domain knowledge are derived and integrated. Further, semantic objects are described, which are linguistic embodiments of either domain entities, domain functions or common sense entities, and which can be nodes of a surface semantic tree or a discourse semantic tree. If the node on a tree refers to a domain function, the operations defined by the function are executed and a domain expert reports back the execution results.

Deng, L., et al, "A speech-centric perspective for human-computer interface", Proceedings of the 2003 IEEE Radar Conference, May 5 to 8, 2003, pages 263 to 267, XP010642560, relates to speech technology which plays a central role in enhancing human-machine interactions, especially for small devices for which GUI has obvious limitations. A wireless mobile PDA prototype is described that enables users to accomplish many common tasks using a multimodal spoken language interface and wireless-data technologies.

### SUMMARY OF THE INVENTION

It is the object of the invention to provide a method and system facilitating the integration of different logic modules.

This object is solved by the invention as claimed in the independent claims.

Preferred embodiments are defined by the dependent claims.

The present invention relates to a computer readable medium having instructions that, when implemented on a computer cause the computer to process information. The instructions include a declarative logic module adapted to define a semantic object having at least one semantic slot and a procedural logic module adapted to define actions to be performed on said one semantic object with reference to the declarative logic module.

Another aspect of the present invention relates to a method for compiling an application. The method includes identifying a designation within a procedural logic module corresponding to a declarative logic module. A semantic object within the declarative logic module is accessed to perform actions in the procedural logic module.

Still another aspect relates to a procedural logic module for processing a natural language input. The module includes a designation corresponding to a declarative logic module defining a semantic object having at least one slot and procedural code adapted to perform actions on the declarative logic module using the semantic object.

A computer readable medium for processing natural language input from a user comprises another aspect of the present invention. The computer readable medium includes a plurality of procedural logic modules. Each procedural logic modules includes a designation corresponding to a declarative logic module defining a plurality of semantic objects arranged in a hierarchical structure. Additionally, each semantic object includes a plurality of slots that can be populated by the natural language input.

### BRIEF DESCRIPTION OF THE DRAWINGS

FIG. 1 is a block diagram of a computing system environment.
FIG. 2 is a block diagram of an environment using a natural understanding interface.
FIG. 3 is a simplified block diagram illustrating an interaction between a compiler, procedural logic modules and declarative logic modules.
FIG. 4 is a block diagram of an exemplary implementation using procedural logic modules and a declarative logic module.

### DETAILED DESCRIPTION OF ILLUSTRATIVE EMBODIMENTS

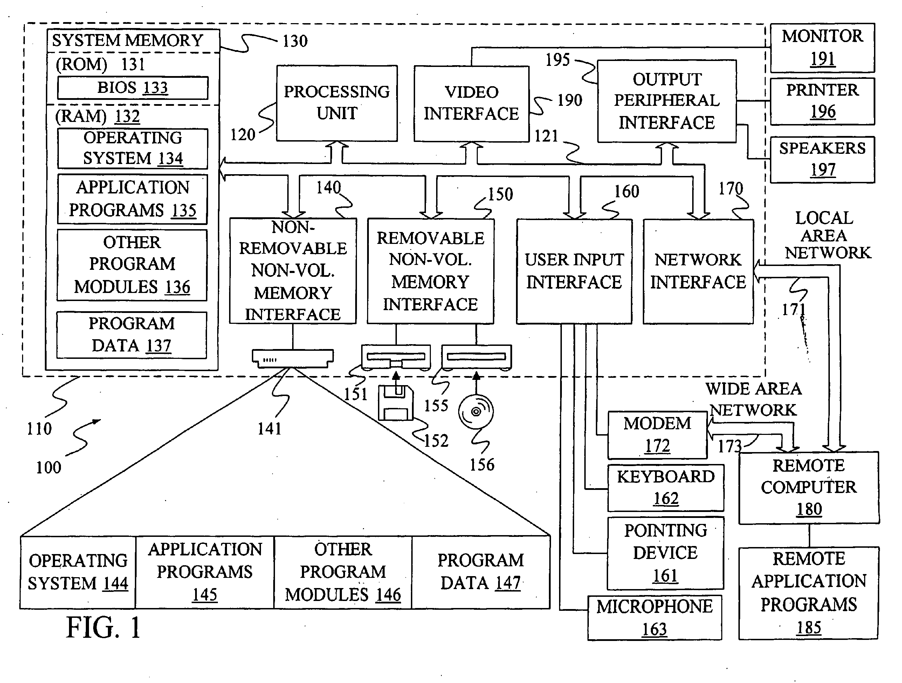

FIG. 1 illustrates an example of a suitable computing system environment 100 on which the invention may be implemented. The computing system environment 100 is only one example of a suitable computing environment and is not intended to suggest any limitation as to the scope of use or functionality of the invention. Neither should the computing environment 100 be interpreted as having any dependency or requirement relating to any one or combination of components illustrated in the exemplary operating environment 100.

The invention is operational with numerous other general purpose or special purpose computing system environments or configurations. Examples of well-known computing systems, environments, and/or configurations that may be suitable for use with the invention include, but are not limited to, personal computers, server computers, hand-held or laptop devices, multiprocessor systems, microprocessor-based systems, set top boxes, programmable consumer electronics, network PCs, minicomputers, mainframe computers, telephony systems, distributed computing environments that include any of the above systems or devices, and the like.

The invention may be described in the general context of computer-executable instructions, such as program modules, being executed by a computer. Generally, program modules include routines, programs, objects, components, data structures, etc. that perform particular tasks or implement particular abstract data types. The invention may also be practiced in distributed computing environments where tasks are performed by remote processing devices that are linked through a communications network. In a distributed computing environment, program modules may be located in both local and remote computer storage media including memory storage devices. Tasks performed by the programs and modules are described below and with the aid of figures. Those skilled in the art can implement the description and figures as processor executable instructions, which can be written on any form of a computer readable medium.

With reference to FIG. 1, an exemplary system for implementing the invention includes a general-purpose computing device in the form of a computer 110. Components of computer 110 may include, but are not limited to, a processing unit 120, a system memory 130, and a system bus 121 that couples various system components including the system memory to the processing unit 120. The system bus 121 may be any of several types of bus structures including a memory bus or memory controller, a peripheral bus, and a local bus using any of a variety of bus architectures. By way of example, and not limitation, such architectures include Industry Standard Architecture (ISA) bus, Micro Channel Architecture (MCA) bus, Enhanced ISA (EISA) bus, Video Electronics Standards Association (VESA) local bus, and Peripheral Component Interconnect (PCI) bus also known as Mezzanine bus.

Computer 110 typically includes a variety of computer readable media. Computer readable media can be any available media that can be accessed by computer 110 and includes both volatile and nonvolatile media, removable and non-removable media. By way of example, and not limitation, computer readable media may comprise computer storage media and communication media. Computer storage media includes both volatile and nonvolatile, removable and non-removable media implemented in any method or technology for storage of information such as computer readable instructions, data structures, program modules or other data. Computer storage media includes, but is not limited to, RAM, ROM, EEPROM, flash memory or other memory technology, CD-ROM, digital versatile disks (DVD) or other optical disk storage, magnetic cassettes, magnetic tape, magnetic disk storage or other magnetic storage devices, or any other medium which can be used to store the desired information and which can be accessed by computer 110. Communication media typically embodies computer readable instructions, data structures, program modules or other data in a modulated data signal such as a carrier wave or other transport mechanism and includes any information delivery media. The term "modulated data signal" means a signal that has one or more of its characteristics set or changed in such a manner as to encode information in the signal. By way of example, and not limitation, communication media includes wired media such as a wired network or direct-wired connection, and wireless media such as acoustic, RF, infrared and other wireless media. Combinations of any of the above should also be included within the scope of computer readable media.

The system memory 130 includes computer storage media in the form of volatile and/or nonvolatile memory such as read only memory (ROM) 131 and random access memory (RAM) 132. A basic input/output system 133 (BIOS), containing the basic routines that help to transfer information between elements within computer 110, such as during start-up, is typically stored in ROM 131. RAM 132 typically contains data and/or program modules that are immediately accessible to and/or presently being operated on by processing unit 120. By way of example, and not limitation, FIG. 1 illustrates operating system 134, application programs 135, other program modules 136, and program data 137.

The computer 110 may also include other removable/non-removable volatile/nonvolatile computer storage media. By way of example only, FIG. 1 illustrates a hard disk drive 141 that reads from or writes to non-removable, nonvolatile magnetic media, a magnetic disk drive 151 that reads from or writes to a removable, nonvolatile magnetic disk 152, and an optical disk drive 155 that reads from or writes to a removable, nonvolatile optical disk 156 such as a CD ROM or other optical media. Other removable/non-removable, volatile/nonvolatile computer storage media that can be used in the exemplary operating environment include, but are not limited to, magnetic tape cassettes, flash memory cards, digital versatile disks, digital video tape, solid state RAM, solid state ROM, and the like. The hard disk drive 141 is typically connected to the system bus 121 through a non-removable memory interface such as interface 140, and magnetic disk drive 151 and optical disk drive 155 are typically connected to the system bus 121 by a removable memory interface, such as interface 150.

The drives and their associated computer storage media discussed above and illustrated in FIG. 1, provide storage of computer readable instructions, data structures, program modules and other data for the computer 110. In FIG. 1, for example, hard disk drive 141 is illustrated as storing operating system 144, application programs 145, other program modules 146, and program data 147. Note that these components can either be the same as or different from operating system 134, application programs 135, other program modules 136, and program data 137. Operating system 144, application programs 145, other program modules 146, and program data 147 are given different numbers here to illustrate that, at a minimum, they are different copies.

A user may enter commands and information into the computer 110 through input devices such as a keyboard 162, a microphone 163, and a pointing device 161, such as a mouse, trackball or touch pad. Other input devices (not shown) may include a joystick, game pad, satellite dish, scanner, or the like. For natural user interface applications, a user may further communicate with the computer using speech, handwriting, gaze (eye movement), and other gestures. To facilitate a natural user interface, a computer may include microphones, writing pads, cameras, motion sensors, and other devices for capturing user gestures. These and other input devices are often connected to the processing unit 120 through a user input interface 160 that is coupled to the system bus, but may be connected by other interface and bus structures, such as a parallel port, game port or a universal serial bus (USB) . A monitor 191 or other type of display device is also connected to the system bus 121 via an interface, such as a video interface 190. In addition to the monitor, computers may also include other peripheral output devices such as speakers 197 and printer 196, which may be connected through an output peripheral interface 190.

The computer 110 may operate in a networked environment using logical connections to one or more remote computers, such as a remote computer 180. The remote computer 180 may be a personal computer, a hand-held device, a server, a router, a network PC, a peer device or other common network node, and typically includes many or all of the elements described above relative to the computer 110. The logical connections depicted in FIG. 1 include a local area network (LAN) 171 and a wide area network (WAN) 173, but may also include other networks. Such networking environments are commonplace in offices, enterprise-wide computer networks, intranets and the Internet.

When used in a LAN networking environment, the computer 110 is connected to the LAN 171 through a network interface or adapter 170. When used in a WAN networking environment, the computer 110 typically includes a modem 172 or other means for establishing communications over the WAN 173, such as the Internet. The modem 172, which may be internal or external, may be connected to the system bus 121 via the user input interface 160, or other appropriate mechanism. In a networked environment, program modules depicted relative to the computer 110, or portions thereof, may be stored in the remote memory storage device. By way of example, and not limitation, FIG. 1 illustrates remote application programs 185 as residing on remote computer 180. It will be appreciated that the network connections shown are exemplary and other means of establishing a communications link between the computers may be used.

Typically, application programs 135 have interacted with a user through a command line or a Graphical User Interface (GUI) through user input interface 160. However, in an effort to simplify and expand the use of computer systems, inputs have been developed which are capable of receiving natural language input from the user. In contrast to natural language or speech, a graphical user interface is precise. A well designed graphical user interface usually does not produce ambiguous references or require the underlying application to confirm a particular interpretation of the input received through the interface 160. For example, because the interface is precise, there is typically no requirement that the user be queried further regarding the input, e.g., "Did you click on the 'ok' button?" Typically, an object model designed for a graphical user interface is very mechanical and rigid in its implementation.

In contrast to an input from a graphical user interface, a natural language query or command will frequently translate into not just one, but a series of function calls to the input object model. In contrast to the rigid, mechanical limitations of a traditional line input or graphical user interface, natural language is a communication means in which human interlocutors rely on each other's intelligence, often unconsciously, to resolve ambiguities. In fact, natural language is regarded as "natural" exactly because it is not mechanical. Human interlocutors can resolve ambiguities based upon contextual information and cues regarding any number of domains surrounding the utterance. With human interlocutors, the sentence, "Forward the minutes to those in the review meeting on Friday" is a perfectly understandable sentence without any further explanations. However, from the mechanical point of view of a machine, specific details must be specified such as exactly *what* document and which meeting are being referred to, and exactly to *whom* the document should be sent.

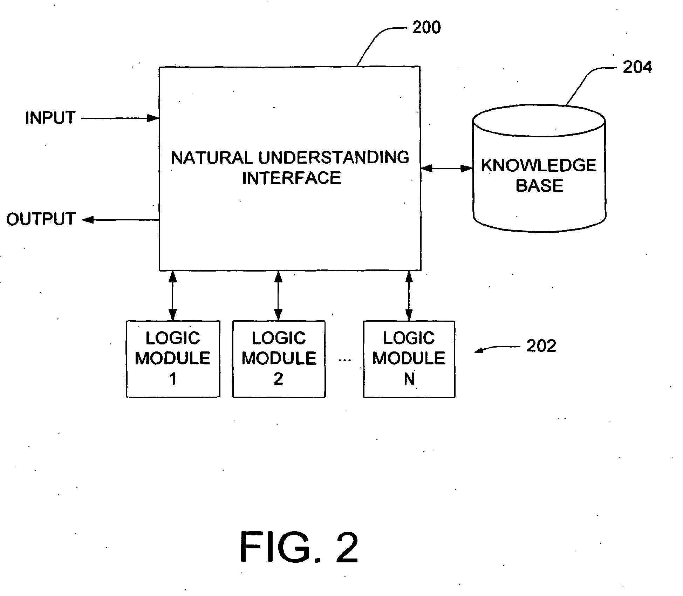

FIG. 2 is a simplified block diagram showing a natural understanding interface 200 for various applications that use logic modules 202. Natural understanding interface 200 receives user input, for example, through a keyboard, hand or gesture recognition device, optical scanner, microphone or other input device. A recognition engine can be used to identify features in the user input. Recognition features for speech are usually words in the spoken language while recognition features for handwriting usually correspond to strokes in the user's handwriting. In one particular example, a grammar can be used to recognize text within a speech utterance. As is known, recognition can also be provided for visual inputs. The recognition features are processed by interface 200 utilizing one or more logic modules 202.

Logic modules 202 include procedural and declarative programming code to drive applications within interface 200. For example, the code can be written using XML, LISP, Prolog, C, C++, C#, Java and/or Fortran. The applications use semantic objects within the logic modules 202 to access information in a knowledge base 204. As used herein, "semantic" refers to a meaning of natural language expressions. Semantic objects can define properties, methods and event handlers that correspond to the natural language expressions. In one embodiment of the present invention, a semantic object provides one way of referring to an entity that can be utilized by one or more of the logic modules 202. A specific domain entity pertaining to a particular domain application can be identified by any number of different semantic objects with each one representing the same domain entity phrased in different ways. The term semantic polymorphism can be used to mean that a specific entity may be identified by multiple semantic objects. The richness of the semantic objects, that is the number of semantic objects, their interrelationships and their complexity, corresponds to the level of user expressiveness that an application would enable in its natural language interface. As an example of polymorphism "John Doe", "VP of NISD", and "Jim's manager" all refer to the same person (John Doe) and are captured by different semantic objects PersonByName, PersonByJob, and PersonByRelationship, respectively.

Semantic objects can also be nested and interrelated to one another including recursive interrelations. In other words, a semantic object may have constituents that are themselves semantic objects. For example, "Jim's manager" corresponds to a semantic object having two constituents: "Jim" which is a "Person" semantic object and "Jim's Manager" which is a "PersonByRelationship" semantic object. These relationships are defined by a semantic schema that declares relationships among semantic objects. In one embodiment, the schema is represented as a parent-child hierarchical tree structure. For example, a "SendMail" semantic object can be a parent object having a "recipient" property referencing a particular person that can be stored in knowledge base 204. Two example child objects can be represented as a "PersonByName" object and a "PersonByRelationship" object that are used to identify a recipient of a mail message from knowledge base 204.

Using logic modules 202, knowledge base 204 can be accessed based on actions to be performed and/or the semantic objects of the logic modules 202. As appreciated by those skilled in the art, knowledge base 204 can include various types and structures of data that can manifest themselves in a number of forms such as, but not limited to, relational or objected oriented databases, Web Services, local or distributed programming modules or objects, XML documents or other data representation mechanism with or without annotations, etc. Specific examples include contacts, appointments, audio files, video files, text files, databases, etc. Natural understanding interface 200 can then provide an output to the user based on the data in knowledge base 204 and actions performed according to one or more logic modules 202.

One aspect of the present invention allows logic modules 202 to be written using various languages including both procedural and declarative languages. Thus, application developers can write source files that utilize different languages to best represent a particular task to be performed and thereby take advantage of features provided by each language. For example, an XML source file can include a semantic object declaration, while a C# source file can include actions to be performed on the semantic object declared in the XML source file. Thus, a class definition can be "distributed" (i.e. accessible) across several source files that are authored in different languages. In one embodiment, source files can be implemented in a shared runtime environment such as Common Language Runtime (CLR).

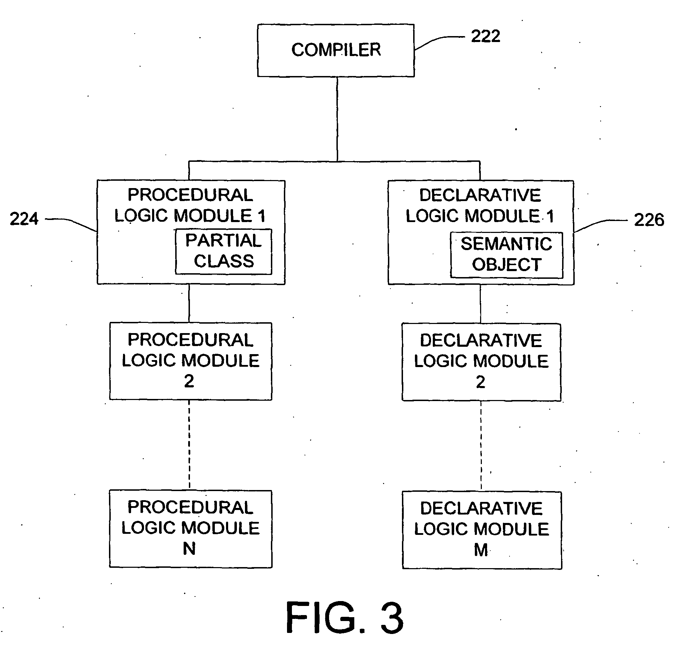

FIG. 3 illustrates a framework for compiling logic modules written using procedural and declarative languages. A compiler 222 interprets code from at least one procedural logic module 224 and at least one declarative logic module 226. In one embodiment, compiler 222 converts the code in each of modules 224 and 226 into a machine language readable by a processor. In a further embodiment, a plurality of procedural and declarative modules can also be used and compiled by compiler 222. For example, procedural logic module 224 can include coding for action(s) that are performed on a semantic object defined in declarative logic module 226. For instance, the actions can be codified in a procedural language such as C#, while the semantic object can be defined using a declarative language such as XML.

In one embodiment of the present invention, procedural logic module 224 includes a "partial class" designation. The partial class designation or reference notifies compiler 222 that the particular class is across multiple source files. As a result, properties, methods and/or event handlers declared in declarative logic module 226 do not have to be repeated in the procedural logic module 224, and thus, compiler 222 will not suspend compiling because such properties, methods, event handlers, etc. are not present in procedural logic module 224.

The programming code below, written in XML, declares a class "Class1" of type "foo1" that includes at least one slot "Slot1" of type "foo2". Other slots and declarations can also be applied in this code depending on a particular application using "Class 1".

```
<Class1 type= "fool">
 
<Slot1 type= "ffo2" max= "10"/> 
...
</Class1>
```

Given that "Class1" has been declared above, a procedural programming module including code such as that provided below can then be written to access slots in "Class1". For example, the code below instantiates a partial class "Class1", which notifies compiler 222 that another source file contains the declaration for "Class1". The code below includes a place holder "noDoubt" for holding data that is used by the "Class1" procedures. As an example, "Slot1" in "Class1" is accessed by the procedure "Slot1.Count ()" provided below.

```
public partial class Class1 : SemObj { 
public SemObj noDoubt; // clearly a place holder,
not a slot 
public void Evaluate ( ) { 
int size = Slotl.Count(); // access Slot1
defined in XML 
... // focus on implementing domain logic here 
noDoubt = Slot1[0]; 
}
}
```

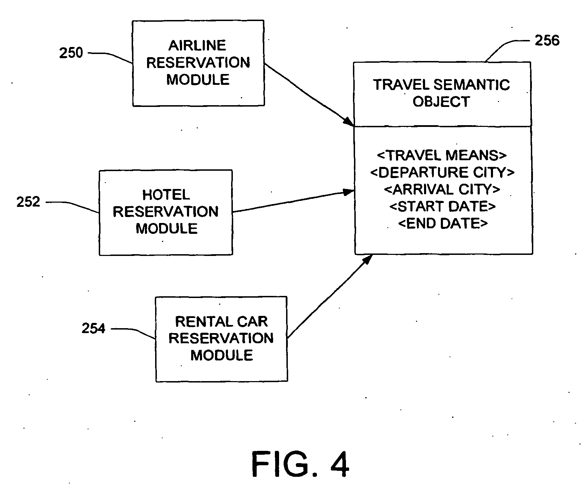

FIG. 4 pictorially illustrates an exemplary application where procedural logic modules perform actions on a semantic object without the semantic object being declared in the procedural logic module. In this example, the procedural logic modules include an airline reservation module 250, a hotel reservation module 252 and a rental car reservation module 254. Each of the procedural logic modules 250, 252 and 254 include the partial class designation that refers to semantic object 256, which can be declared in a separate "declaration" XML source file, for example. Semantic object 256 includes travel data used by modules 250, 252 and 254 including travel means, departure city, arrival city, start date and/or end date.

Semantic object 256 can be accessed by each of the procedural logic modules 250, 252 and 254 by using the partial class designation. Thus, application developers need to only develop one instance of travel semantic object 256. Code written in the airline reservation module 250, hotel reservation module 252 and rental car reservation module 254 can be executed to perform actions on any or all of the data elements in travel semantic object 256. As a result, applications can be authored in a time efficient manner that can reduce redundant declarations and thereby prevent errors resulting from integration of procedural and declarative logic.

In an exemplary embodiment with further reference to the system illustrated in FIG. 2, a user can provide a natural language input of, "Schedule a flight from Seattle to Minneapolis next Tuesday", to interface 200. In this instance, a speech application program interface such as SAPI 5.2 provided by Microsoft Corporation of Redmond, Washington can be used to identify semantic objects within the natural language input input. The input can be associated with semantic tags (i.e. serialized) into a format corresponding to a language such as semantic markup language to populate travel semantic object 256 of FIG. 4. For example, the speech application program interface could provide an output such as:

```
<sml text="Schedule a flight from Seattle to

Minneapolis next Tuesday" confidence="90"> 
<TravelSemanticObject text="flight"> 
<TravelMeans type="airline"> 
<DepartureCity type="airport code"> SEA
</DepartureCity> 
<ArrivalCity type="airport code"> MSP
</ArrivalCity> 
<StartDate type="date"> April 27
</StartDate> 
</TravelMeans> 
</TravelSemanticObject>
</sml>
```

The slots of travel semantic object 256 are then at least partially populated with information from the natural language input. Rules and/or a semantic schema associated with travel semantic object 256 can then be utilized, if desired, to prompt the user for remaining unknown information such as herein an end date for travel. Using the information in the slots of travel semantic object 256, airline reservation module 250 can be instantiated to access knowledge base 204 to provide flight pricing, availability, etc. Additionally, hotel reservation module 252 and rental car reservation module 254 can be instantiated to offer potential hotel and rental car reservations based on travel semantic object 256 without further declarations of the travel semantic object 256 within the respective procedural coding modules. Thus, travel semantic object 256 can be accessed by a plurality of procedural programming modules with a single declaration.

The exemplary embodiments provided above are highly simplified in nature and are provided to illustrate operation of the present invention. They illustrate operation of the invention, which can be expanded to much more complex object hierarchies. When the natural language expression is not trivial, a tree of semantic object can be used to sufficiently capture the meaning of an utterance in a manner that can be conveyed in an appropriate form to logic modules 202.

The present invention thus provides a powerful operating tool that allows semantic objects to be declared in a multitude of programming syntaxes, for example using a declarative coding language such as XML or using a procedural coding language such as C# or C++. This framework is thus well suited for a plurality of procedural programming modules to utilize a declarative module without need for multiple declarations of semantic objects and vice versa. Attributes, properties, methods and event handlers of the objects are utilized by the procedural modules to allow easier authoring of the procedural modules in a single location.

Although the present invention has been described with reference to particular embodiments, workers skilled in the art will recognize that changes may be made in form and detail without departing from the scope of the invention.

## Claims

1. A computer readable medium having instructions that, when implemented on a computer cause the computer to process information, the instructions comprising:
a declarative logic module (226) adapted to define a semantic object (256) having at least one semantic slot; and
a procedural logic module (224, 250-254) adapted to define actions to be performed on the semantic object, wherein the procedural logic module includes a partial class designation referencing the declarative logic module and notifying a compiler (222) that the semantic object is across multiple source files.

2. The computer readable medium of claim 1 wherein the declarative logic module is implemented using at least one of XML, LISP and Prolog.

3. The computer readable medium of claim 1 wherein the procedural logic module is implemented using at least one of C, C++, Java, and C#.

4. The computer readable medium of claim 1 wherein the instructions further comprise:
a second procedural logic module adapted to define actions to be performed on the semantic object with a reference to the declarative logic module.

5. The computer readable medium of claim 1 wherein the declarative logic module is adapted to define a schema of related semantic objects in a hierarchical structure.

6. The computer readable medium of claim 1 wherein the semantic object includes a plurality of slots.

7. The computer readable medium of claim 1 and further comprising:
the compiler adapted to convert the declarative logic module and the procedural logic module into a machine language readable by a processor.

8. The computer readable medium of claim 1 and further comprising:
an interface for receiving natural language input from a user.

9. The computer readable medium of claim 8 wherein the at least one slot of the declarative logic module is adapted for population with at least a portion of the natural language input.

10. The computer readable medium of claim 9 wherein the procedural logic module performs an action on the at least one slot that has been populated.

11. The computer readable medium of claim 9 wherein the interface is adapted to access a knowledge base based on the at least one slot that is populated.

12. The computer readable medium of claim 1 wherein the procedural logic module is for processing a natural language input, and wherein the procedural logic module comprises procedural code adapted to perform actions on the declarative logic module using the semantic object.

13. The computer readable medium of claim 12 wherein the procedural logic module is further adapted to access a knowledge base using the semantic object and said at least one slot.

14. The computer readable medium of claim 12 wherein the partial class designation is referencing the semantic object.

15. The computer readable medium of claim 12 wherein the semantic object defines a plurality of slots.

16. The computer readable medium of claim 12 wherein the partial class designation corresponds to a plurality of semantic objects arranged in a hierarchical structure.

17. The computer readable medium of claim 1 wherein the computer is caused to process natural language input from a user, the instructions comprise a plurality of procedural logic modules, and wherein each procedural logic module includes a partial class designation corresponding to a declarative logic module defining a plurality of semantic objects arranged in a hierarchical structure, each semantic object including a plurality of slots that can be populated by the natural language input.

18. A method for compiling an application, comprising:
identifying a partial class designation within a procedural logic module (224, 250-254) referencing a declarative logic module (226) and notifying a compiler (222) that a semantic object (256) defined by the declarative logic module is across multiple source files; and
accessing the semantic object within the declarative logic module to perform actions in the procedural logic module.

19. The method of claim 18 and further comprising:
converting the procedural logic module and the declarative logic module into a machine language readable by a processor.

20. The method of claim 18 wherein a plurality of procedural logic modules include the partial class designation corresponding to the declarative logic module.

21. The method of claim 18 and further comprising:
declaring a plurality of related semantic objects in a hierarchical structure.

## Patentansprüche

1. Computerlesbarer Datenträger, der Instruktionen aufweist, die, wenn sie auf einem Computer implementiert werden, den Computer veranlassen, Informationen zu verarbeiten, wobei die Instruktionen umfassen:
ein deklaratives, logisches Modul (226), das eingerichtet ist, ein semantisches Objekt (256) zu definieren, das mindestens eine semantische Aussparung aufweist; und
ein verfahrensorientiertes, logisches Modul (224, 250-254), das eingerichtet ist, Aktivitäten zu definieren, die auf dem semantischen Objekt ausgeführt werden sollen, wobei das verfahrensorientierte, logische Modul eine partielle Klassenbenennung einschließt, die das deklarative, logische Modul referenziert und einen Compiler (222) verständigt, dass sich das semantische Objekt über mehrere Quelldateien befindet.

2. Computerlesbarer Datenträger nach Anspruch 1, wobei das deklarative, logische Modul unter Verwendung von XML, LISP und/oder Prolog implementiert ist.

3. Computerlesbarer Datenträger nach Anspruch 1, wobei das verfahrensorientierte, logische Modul unter Verwendung von C, C++, Java und/oder C# implementiert ist.

4. Computerlesbarer Datenträger nach Anspruch 1, wobei die Instruktionen des Weiteren umfassen:
ein zweites verfahrensorientiertes, logisches Modul, das eingerichtet ist, Aktivitäten zu definieren, die mit einer Referenz auf das deklarative, logische Modul auf dem semantischen Objekt durchgeführt werden sollen.

5. Computerlesbarer Datenträger nach Anspruch 1, wobei das deklarative, logische Modul eingerichtet ist, ein Schema mit verwandten semantischen Objekten in einer hierarchischen Struktur zu definieren.

6. Computerlesbarer Datenträger nach Anspruch 1, wobei das semantische Objekt eine Vielzahl von Aussparungen einschließt.

7. Computerlesbarer Datenträger nach Anspruch 1 und des Weiteren umfassend:
den Compiler, der eingerichtet ist, das deklarative, logische Modul und das verfahrensorientierte, logische Modul in eine Maschinensprache zu konvertieren, die durch einen Prozessor lesbar ist.

8. Computerlesbarer Datenträger nach Anspruch 1, und des Weiteren umfassend:
eine Schnittstelle zum Empfangen einer natürlichen Spracheingabe von einem Benutzer.

9. Computerlesbarer Datenträger nach Anspruch 8, wobei die mindestens eine Aussparung des deklarativen, logischen Moduls für eine Befüllung mit mindestens einem Teil der natürlichen Spracheingabe eingerichtet ist.

10. Computerlesbarer Datenträger nach Anspruch 9, wobei das verfahrensorientierte, logische Modul eine Aktivität auf der mindestens einen Aussparung, die befüllt worden ist, durchführt.

11. Computerlesbarer Datenträger nach Anspruch 9, wobei die Schnittstelle eingerichtet ist, basierend auf der mindestens einen Aussparung, die befüllt ist, auf eine Wissensbasis zuzugreifen.

12. Computerlesbarer Datenträger nach Anspruch 1, wobei das verfahrensorientierte, logische Modul für die Verarbeitung einer natürlichen Spracheingabe ist, und wobei das verfahrensorientierte, logische Modul verfahrensorientierten Kode umfasst, der zum Durchführen von Aktivitäten auf dem deklarativen, logischen Modul unter Verwendung des semantischen Objekts eingerichtet ist.

13. Computerlesbarer Datenträger nach Anspruch 12, wobei das verfahrensorientierte, logische Modul des Weiteren eingerichtet ist, unter Verwendung des semantischen Objekts und der mindestens einen Aussparung auf eine Wissensbasis zuzugreifen.

14. Computerlesbarer Datenträger nach Anspruch 12, wobei die partielle Klassenbenennung das semantische Objekt referenziert.

15. Computerlesbarer Datenträger nach Anspruch 12, wobei das semantische Objekt eine Vielzahl von Aussparungen definiert.

16. Computerlesbarer Datenträger nach Anspruch 12, wobei die partielle Klassenbenennung einer Vielzahl von semantischen Objekten, die in einer hierarchischen Struktur angeordnet sind, entspricht.

17. Computerlesbarer Datenträger nach Anspruch 1, wobei der Computer veranlasst wird, eine natürliche Spracheingabe von einem Benutzer zu verarbeiten, die Instruktionen eine Vielzahl von verfahrensorientierten, logischen Modulen umfassen, und wobei jedes verfahrensorientierte, logische Modul eine partielle Klassenbenennung einschließt, die einem deklarativen, logischen Modul entspricht, das eine Vielzahl von semantischen Objekten, die in einer hierarchischen Struktur angeordnet sind, definiert, wobei jedes semantische Objekt eine Vielzahl von Aussparungen einschließt, die durch die natürliche Spracheingabe befüllt werden können.

18. Ein Verfahren zum Kompilieren einer Anwendung, wobei das Verfahren umfasst:
Identifizieren einer partiellen Klassenbenennung innerhalb eines verfahrensorientierten, logischen Moduls (224, 250-254), das ein deklaratives, logisches Modul (226) referenziert und einen Compiler (222) verständigt, dass sich ein semantisches Objekt (256), das durch das deklarative, logische Modul definiert ist, über mehrere Quelldateien befindet; und
Zugreifen auf das semantische Objekt innerhalb des deklarativen, logischen Moduls, um Aktivitäten in dem verfahrensorientierten, logischen Modul durchzuführen.

19. Verfahren nach Anspruch 18, und des Weiteren umfassend:
Umwandeln des verfahrensorientierten, logischen Moduls und des deklarativen, logischen Moduls in eine Maschinensprache, die durch einen Prozessor lesbar ist.

20. Verfahren nach Anspruch 18, wobei eine Vielzahl von verfahrensorientierten, logischen Modulen die partielle Klassenbenennung einschließen, die dem deklarativen, logischen Modul entspricht.

21. Verfahren nach Anspruch 18, und des Weiteren umfassend:
Deklarieren einer Vielzahl von verwandten semantischen Objekten in einer hierarchischen Struktur.

## Revendications

1. Support lisible par ordinateur ayant des instructions qui, lorsqu'elles sont implémentées sur un ordinateur, amènent l'ordinateur à traiter des informations, les instructions comportant :
un module logique déclaratif (226) adapté pour définir un objet sémantique (256) ayant au moins un attribut sémantique ; et
un module logique procédural (224, 250-254) adapté pour définir des actions à réaliser sur l'objet sémantique, dans lequel le module logique procédural inclut une désignation de classe partielle faisant référence au module logique déclaratif et notifiant à un compilateur (222) que l'objet sémantique est réparti à travers de multiples fichiers sources.

2. Support lisible par ordinateur selon la revendication 1, dans lequel le module logique déclaratif est implémenté en utilisant au moins l'un des langages XML, LISP et Prolog.

3. Support lisible par ordinateur selon la revendication 1, dans lequel le module logique procédural est implémenté en utilisant au moins l'un des langages C, C++, Java et C#.

4. Support lisible par ordinateur selon la revendication 1, dans lequel les instructions comportent de plus :
un second module logique procédural adapté pour définir des actions à réaliser sur l'objet sémantique avec une référence au module logique déclaratif.

5. Support lisible par ordinateur selon la revendication 1, dans lequel le module logique déclaratif est adapté pour définir un schéma d'objets sémantiques liés dans une structure hiérarchique.

6. Support lisible par ordinateur selon la revendication 1, dans lequel l'objet sémantique inclut plusieurs attributs.

7. Support lisible par ordinateur selon la revendication 1 et comportant de plus :
le compilateur adapté pour convertir le module logique déclaratif et le module logique procédural dans un langage machine lisible par un processeur.

8. Support lisible par ordinateur selon la revendication 1 et comportant de plus :
une interface pour recevoir une entrée en langage naturel d'un utilisateur.

9. Support lisible par ordinateur selon la revendication 8, dans lequel l'attribut du module logique déclaratif est adapté pour être renseigné avec au moins une partie de l'entrée en langage naturel.

10. Support lisible par ordinateur selon la revendication 9, dans lequel le module logique procédural effectue une action sur l'attribut qui a été renseigné.

11. Support lisible par ordinateur selon la revendication 9, dans lequel l'interface est adaptée pour accéder à une base de connaissances basée sur l'attribut qui est renseigné.

12. Support lisible par ordinateur selon la revendication 1, dans lequel le module logique procédural sert à traiter une entrée en langage naturel, et dans lequel le module logique procédural comporte un code procédural adapté pour exécuter des actions sur le module logique déclaratif en utilisant l'objet sémantique.

13. Support lisible par ordinateur selon la revendication 12, dans lequel le module logique procédural est en outre adapté pour accéder à une base de connaissances en utilisant l'objet sémantique et ledit attribut.

14. Support lisible par ordinateur selon la revendication 12, dans lequel la désignation de classe partielle fait référence à l'objet sémantique.

15. Support lisible par ordinateur selon la revendication 12, dans lequel l'objet sémantique définit plusieurs attributs.

16. Support lisible par ordinateur selon la revendication 12, dans lequel la désignation de classe partielle correspond à plusieurs objets sémantiques organisés dans une structure hiérarchique.

17. Support lisible par ordinateur selon la revendication 1, dans lequel l'ordinateur est amené à traiter une entrée en langage naturel d'un utilisateur, les instructions comportent plusieurs modules logiques procéduraux, et dans lequel chaque module logique procédural inclut une désignation de classe partielle correspondant à un module logique déclaratif définissant plusieurs objets sémantiques organisés dans une structure hiérarchique, chaque objet sémantique incluant plusieurs attributs qui peuvent être renseignés par l'entrée en langage naturel.

18. Procédé pour compiler une application, comportant :
l'identification d'une désignation de classe partielle dans un module logique procédural (224, 250-254) faisant référence à un module logique déclaratif (226) et notifiant à un compilateur (222) qu'un objet sémantique (256) défini par le module logique déclaratif est réparti à travers de multiples fichiers sources, et
l'accès à l'objet sémantique dans le module logique déclaratif pour exécuter des actions dans le module logique procédural.

19. Procédé selon la revendication 18 et comportant de plus :
la conversion du module logique procédural et du module logique déclaratif dans un langage machine lisible par un processeur.

20. Procédé selon la revendication 18, dans lequel plusieurs modules logiques procéduraux incluent la désignation de classe partielle correspondant au module logique déclaratif.

21. Procédé selon la revendication 18 et comportant en outre :
la déclaration de plusieurs objets sémantiques liés dans une structure hiérarchique.
